# EUROPÄISCHE PATENTSCHRIFT

(11) **EP 1 201 039 B1**
(45) Veröffentlichungstag und Bekanntmachung des Hinweises auf die Patenterteilung: **03.11.2004**
(21) Anmeldenummer: 00943831.8
(22) Anmeldetag: 19.06.2000
(51) Int. Cl.: H04B 1/40

(54) **SYSTEM ZUM GEMEINSAMEN BETREIBEN VON AUF VERSCHIEDENE WELLENFORMEN EINSTELLBARE DIGITAL ARBEITENDE FUNKGERÄTE**
SYSTEM FOR THE COMMON OPERATION OF DIGITAL RADIO DEVICES ADJUSTABLE ACCORDING TO DIFFERENT WAVEFORMS
PROCEDE D'UTILISATION COMMUNE D'APPAREILS RADIO NUMERIQUES REGLABLES SELON DIFFERENTES FORMES D'ONDES

(30) Priorität: 02.08.1999 DE 19936309
(43) Veröffentlichungstag der Anmeldung: 02.05.2002
(73) Patentinhaber: Rohde & Schwarz GmbH & Co. KG, 81671 München (DE)
(72) Erfinder: ISELT, Peter, D-80997 München (DE)
(74) Vertreter: Körfer, Thomas, Dipl.-Phys.
(86) Internationale Anmeldenummer: PCT/EP2000/005624
(87) Internationale Veröffentlichungsnummer: WO 2001/010050

(56) Entgegenhaltungen:
- US-A- 5 448 765
- LACKEY R J ET AL: "SPEAKEASY: THE MILITARY SOFTWARE RADIO" IEEE COMMUNICATIONS MAGAZINE,US,IEEE SERVICE CENTER. PISCATAWAY, N.J, Bd. 33, Nr. 5, 1. Mai 1995 (1995-05-01), Seiten 56-61, XP000518771 ISSN: 0163-6804
- GUNN J E ET AL: "A LOW-POWER DSP CORE-BASED SOFTWARE RADIO ARCHITECTURE" IEEE JOURNAL ON SELECTED AREAS IN COMMUNICATIONS,US,IEEE INC. NEW YORK, Bd. 17, Nr. 4, April 1999 (1999-04), Seiten 574-590, XP000824304 ISSN: 0733-8716

## Beschreibung

Die Erfindung betrifft und geht aus von einem System laut Oberbegriff des Hauptanspruches.

Die moderne Digitaltechnik macht es möglich, in Zukunft digitale Funk-Sendeund/oder Empfangsgeräte zu realisieren, die einen im wesentlichen gleichen Hardware-Aufbau besitzen und die durch Einlesen von unterschiedlicher Software mit unterschiedlichen Wellenformen betrieben werden können. Unter Wellenform wird in diesem Zusammenhang das am Übergang vom Gerät zur Funkstrecke am Ausgang der Antenne auftretende Signal verstanden, das durch eine Vielzahl von Parametern wie Frequenz, Modulationsart, Leistung, Signalform (z.B. Frequenzsprungverfahren) bestimmt ist. Eine solche Wellenform kann je nach Komplexität durch z.B. 20 bis 200 einzelne Parameter mit gegenseitiger Abhängigkeit bestimmt sein, die zu einem Parametersatz zusammengefaßt sind und als Software in das Sendegeräte und/oder Empfangsgerät eingelesen werden, so daß das Gerät dann mit dieser ausgewählten Wellenform betreibbar ist. Dieses moderne multifunktionale Funkgeräteprinzip ist beispielsweise näher beschrieben in dem Aufsatz "Multifunctional Radio Platform for Dual-Use Applications" von Peter Iselt, AFCEA-Tagung München vom 20./21. April 1999.

Solche multifunktionalen Funkgeräte werden bei den verschiedenen Betreibern bisher mit unterschiedlichen Wellenformen betrieben und sind nicht interoperabel. Es wäre zwar möglich, in solchen multifunktionalen Funkgeräten alle denkbaren oder relevanten Wellenformen als komplette Parametersätze abzuspeichern, die durch einen Umschaltbefehl aufgerufen werden können, so daß solche Funkgeräte mit einer gemeinsamen Wellenform betrieben werden können. In der Praxis ist dies jedoch wegen des dafür erforderlichen enormen Speicherbedarfes und der damit nicht akzeptablen Belastung der Funkgeräte-Plattform nicht realisierbar.

Es ist Aufgabe der Erfindung, ein System aufzuzeigen, mit dem solche multifunktionalen Funkgeräte über eine Zentrale schnell auf eine vorbestimmte gemeinsame Wellenform eingestellt werden können, so daß solche zunächst in unterschiedlichen Systemen betriebenen multifunktionalen Funkgeräte in kürzester Zeit miteinander kommunizieren können.

Diese Aufgabe wird ausgehend von einem System laut Oberbegriff des Hauptanspruches durch dessen kennzeichnende Merkmale gelöst. Eine vorteilhafte Weiterbildung ergibt sich aus dem Unteranspruch.

Gemäß der Erfindung können multifunktionale Funkgeräte, die ursprünglich in verschiedenen Kommunikationssystemen mit unterschiedlicher Wellenform arbeiten, über eine Zentrale schnell auf eine gemeinsame Wellenform umgestellt werden und so miteinander kommunizieren. Zu diesem Zweck wird von der Zentrale aus zu den einzelnen Funkgeräten nicht der gesamte Parametersatz der gewünschten gemeinsamen Wellenform übertragen, sondern nur einzelne Adressen, die entsprechenden Teilparametersätzen zugeordnet sind, die zusammengesetzt dann den Gesamtparametersatz für die gewünschte Wellenform ergeben. Diese Übertragung von nur einzelnen Adressen kann sehr schnell in kürzester Zeit mit hoher Übertragungssicherheit erfolgen. Während für die Übertragung eines Gesamtparametersatzes mehrere Stunden nötig sein können, kann die Übertragung der einzelnen Adressen in einigen Sekunden oder Minuten erfolgen.

Gemäß einer Weiterbildung der Erfindung hat es sich als zweckmäßig erwiesen, die eine Wellenform bestimmende gesamte Software in zwei Teilpakete aufzuteilen und den die Funktionen und Abhängigkeiten der Parameter eines Parametersatzes beschreibenden Teil der Software in den einzelnen Funkgeräten abzuspeichern, so daß nur der die Parametersätze umfassende bestimmende Teil der Software über die einzelnen Adressen per Funk abgefragt werden muß, um die Funkgeräte mit einer ausgewählten Wellenform zu betreiben. Der beschreibende Teil der Wellenform-Software könnte dabei zwar ebenfalls über entsprechende Adressen per Funk in wellenformspezifischer Zusammensetzung ausgelesen werden, es hat sich jedoch als zweckmäßig erwiesen, diesen beschreibenden Teil der Software als festen Software-Bestandteil im Funkgerät abzuspeichern und nur die wellenformspezifischen Teil-Parametersätze über die Adressen per Funk auszulesen.

Das erfindungsgemäße System ist sowohl für den zivilen als auch für den militärischen Kommunikationsbereich geeignet. Es können so beispielsweise Aktionen mit Teilnehmern aus unterschiedlichen Bündnissen durchgeführt werden, die jeweils mit unterschiedlichen Technologiestandards arbeiten. Auch die Zusammenarbeit von zivilen, staatlichen oder militärischen Organisationen im Bereich des Katastrophenschutzes oder bei friedenserhaltenden Maßnahmen wird durch das erfindungsgemäße System wesentlich verbessert.

Die Erfindung wird im Folgenden anhand einer schematischen Zeichnung an einem Ausführungsbeispiel näher erläutert.

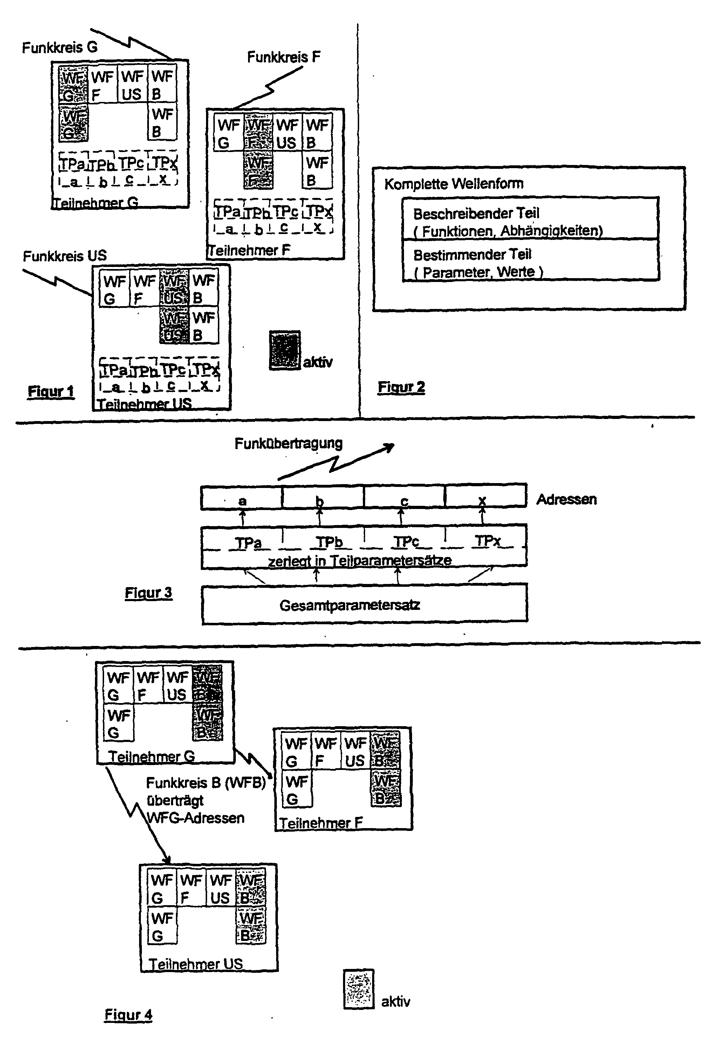

Die Figur 1 zeigt die Anwendung des erfindungsgemäßen Systems in einem Krisengebiet, in welchem drei unterschiedliche Funksysteme betrieben werden, beispielsweise ein deutsches Funksystem G, das mit einer Wellenform WFG arbeitet, ein französisches System F, das mit einer Wellenform WFF arbeitet und ein US-Funksystem US, das nach der Wellenform WFUS arbeitet. Alle diese drei zunächst unterschiedlichen Funksysteme, jeweils bestehend aus Funksendern und Funkempfängern, sind bezüglich ihrer Architektur (Aufbau) etwa gleich bzw. sogar identisch, sie können durch Eingabe entsprechender Software über Parametersätze auf unterschiedliche Wellenformen eingestellt werden. Außerdem ist zwischen diesen drei unterschiedlichen Funksystemen G, F und US eine gemeinsame Funkverbindung vorhanden, beispielsweise mit einer Wellenform WFB, die zumindest zu bestimmten Zeiten vorhanden ist und einen Informationsaustausch zwischen den drei zunächst getrennten Funksystemen ermöglicht.

Wenn nun beispielsweise aus taktischen Gründen die drei Funksysteme miteinander in Verbindung treten sollen und dies beispielsweise von dem deutschen Funksystem G als Führungseinheit gewünscht wird, so wird über die gemeinsame Funkverbindung WFB von der als Zentrale wirkenden Einheit G zu den beiden anderen Funksystemen F und US der Befehl übertragen, daß auch diese Funksysteme F und US auf die Wellenform WFG umgestellt werden sollen.

Zu diesem Zweck wird über die gemeinsame Funkverbindung WFB die Software für die Wellenform WFG zu den Teilnehmern der Funksysteme F und US übertragen.

Da die Übertragung der die Wellenform WFG bestimmenden Gesamt-Software mehrere Stunden dauern würde, wird die die Wellenform WFG bestimmende Software gemäß Figur 2 in zwei Teilpakete, nämlich einen beschreibenden Teil und einen bestimmenden Teil aufgeteilt. Der beschreibende Teil beinhaltet die Funktionen und Abhängigkeiten der jeweiligen Parameter der Wellenform, während der bestimmende Teil die eigentlichen Parameter und deren Werte beinhaltet. Im Funkgerät ist der beschreibende Teil vollständig abgespeichert und ist Teil der Betriebssoftware für das Funkgerät. Die Parametersätze des bestimmenden Teiles für die verschiedenen möglichen Wellenformen sind gemäß Figur 3 jeweils in Teilparametersätze aufgeteilt, denen entsprechende Adressen zugeordnet sind. Ein Parametersatz für eine spezielle Wellenform, beispielsweise WFG, kann beispielsweise aus einhundert Einzelparametem oder mehr bestehen. All diese Parametersätze für die verschiedenen Wellenformen werden in Teilparametersätze TPa, TPb, TPc .... TPx aufgeteilt und zwar werden jeweils solche Einzelparameter zu Teilparametersätzen zusammengefaßt, daß diese Teilparametersätze jeweils für mehrere Gesamtparametersätze von unterschiedlichen Wellenformen brauchbar sind. Jedem dieser Teilparametersätze TPa bis TPx ist jeweils eine Adresse a, b bis x zugeordnet. Diese Teilparametersätze mit ihren zugeordneten Adressen sind in allen Funkgeräten der verschiedenen Funksysteme G, F und US abgespeichert und zwar zusammen mit dem jeweils zugehörigen beschreibenden Softwareteil.

Wenn nun im Sinne des obigen Beispiels über das als Zentrale wirkende Funksystem G ein Umprogrammieren der Funkgeräte aller drei Funksysteme G, F und US auf die Wellenform WFG gefordert wird, so werden gemäß Figur 4 über die Funkverbindung WFB nur die Adressen übertragen, deren zugehörige Teilparametersätze zusammengesetzt den Parametersatz ergeben, welcher zusammen mit dem beschreibenden Softwareteil der Wellenform WFG entspricht. Diese Teilparametersätze werden aus den zugehörigen Speichern der Geräte der Systeme F und US ausgelesen und die entsprechenden Geräte werden so in kürzester Zeit auf die gemeinsame Wellenform WFG eingestellt, so daß dann die drei Funksysteme G, F und US untereinander über WFG kommunizieren können.

Die Übertragung von nur Adressen über die Verbindung WFB kann sehr sicher und fehlerfrei, gegebenenfalls auch verschlüsselt erfolgen, so daß Fehlsteuerungen vermieden werden.

## Patentansprüche

1. System zum Betreiben von auf verschiedene Wellenformen einstellbaren digitalen Funkgeräten, wobei die Wellenform das am Übergang vom Funkgerät zur Funkstrecke am Ausgang der Antenne auftretende Signal ist, das durch eine Vielzahl von Parameter, wie Frequenz, Modulationsart, Leistung, Signalform usw. bestimmt ist, mit einer durch eine Zentrale vorgegebenen gemeinsamen Wellenform, bei dem die Wellenformen der Funkgeräte durch als Software eingegebene Parametersätze einstellbar sind,
**dadurch gekennzeichnet,**
**daß** die Parametersätze der verschiedenen Wellenformen in mehrere Teil-Parametersätze (TPa bis TPx) unterteilt sind, denen jeweils eine Adresse (a, b, c bis x) zugeordnet ist, in den gemeinsam zu betreibenden digitalen Funkgeräten (G, F, US) unter diesen Adressen jeweils die zugehörigen Teilparametersätze gespeichert sind und zum Einstellen einer gemeinsamen Wellenform (z.B. WFG) von der Zentrale (z.B. G) über eine allen Funkgeräten gemeinsame Funkverbindung (WFB) nur die Adressen der für die gewählte Wellenform erforderlichen Teilparameter übertragen und dort als die gewählte Wellenform bestimmender Gesamtparametersatz ausgelesen werden.

2. System nach Anspruch 1,
**dadurch gekennzeichnet,**
**daß** die die verschiedenen Wellenformen bestimmende Software in einen die Funktionen und Abhängigkeiten der Parameter beschreibenden Teil und einen die eigentlichen Parameter umfassenden bestimmenden Teil aufgeteilt ist, der beschreibende Teil der Software jeweils in den Funkgeräten abgespeichert ist und nur der bestimmende Teil der Software in durch Adressen über Funk abrufbare Teilparametersätze unterteilt ist, so daß in den Funkgeräten aus den über die Adressen per Funk ausgelesenen Teilparametersätzen zusammen mit dem im Funkgerät gespeicherten beschreibenden Teil der Software die wellenformspezifische Software gebildet wird.

3. System nach Anspruch 1 oder 2,
**dadurch gekennzeichnet,**
**daß** die Aufteilung der Einzelparameter in die Teilparametersätze so gewählt ist, daß diese jeweils für mehrere verschiedene wellenformspezifische Gesamtparametersätze einsetzbar sind.

## Claims

1. System for operating digital radio devices which are adjustable according to different waveforms, the waveform being the signal occurring at the transition from the radio device to the radio stretch at the output of the antenna, said signal being determined by a multiplicity of parameters, such as frequency, modulation type, power, signal form etc., having a common waveform prescribed by a central office, in which system the waveforms of the radio devices are adjustable by means of parameter sets input as software,
**characterised in that**
the parameter sets of the different waveforms are sub-divided into a plurality of partial parameter sets (TPa to TPx), to which respectively one address (a, b, c to x) is assigned, the associated partial parameter sets are stored under these addresses respectively in the digital radio devices (G, F, US) to be operated in common and, in order for a common waveform (e.g. WFG) to be set, only the addresses of the partial parameters required for the chosen waveform are transmitted by the central office (e.g. G) via a radio connection (WFB) common to all radio devices, and are read out there as total parameter set determining the selected waveform.

2. System according to claim 1,
**characterised in that**
the software determining the different waveforms is divided into a part writing in the functions and dependencies of the parameters and a determining part comprising the actual parameters, the write-in part of the software is stored respectively in the radio devices and only the determining part of the software is sub-divided into partial parameter sets which can be called up by means of addresses via radio so that, in the radio devices, the waveform-specific software is formed from the partial parameter sets which are read out via the addresses per radio together with the write-in part of the software which is stored in the radio device.

3. System according to claim 1 or 2,
**characterised in that**
the division of the individual parameters into the partial parameter sets is chosen such that these can by used respectively for a plurality of different waveform-specific total parameter sets.

## Revendications

1. Système pour l'utilisation de dispositifs radio numériques réglables sur différentes formes d'ondes, moyennant quoi la forme d'onde est le signal au niveau de la transition entre le dispositif radio et la liaison radioélectrique à la sortie de l'antenne, qui est déterminé par une pluralité de paramètres comme la fréquence, le type de modulation, la puissance, la forme du signal, etc., avec une fore d'onde commune prédéterminée par un central, dans lequel la forme d'onde des dispositifs radio peut être réglée à l'aide d'ensembles de paramètres entrés en tant que logiciel, **caractérisé en ce que** les ensembles de paramètres des différentes formes d'ondes sont divisés en plusieurs ensembles de paramètres partiels (Tpa à TPx), à chacun desquels est associé une adresse (a, b, c à x), les ensembles de paramètres partiels sont enregistrés dans les dispositifs radio à utiliser ensemble (G, F, US) sous ces adresses, et pour le réglage d'une forme d'onde commune (par exemple WFG) par le central (par exemple G), par l'intermédiaire d'une liaison radio commune à tous les dispositifs radio (WFB), seules les adresses des paramètres partiels nécessaires pour la forme d'onde sélectionnée sont transmises et lues en tant qu'ensemble complet de paramètres déterminant la forme d'onde sélectionnée.

2. Système selon la revendication 1, **caractérisé en ce que** le logiciel déterminant les différentes formes d'ondes est divisé en une partie descriptive contenant les fonctions et dépendances des paramètres et une partie déterminante contenant les paramètres proprement dits, la partie descriptive du logiciel est enregistrée dans les dispositifs radio et seule la partie déterminantes du logiciel est divisée en ensembles de paramètres partiels pouvant être appelées à l'aide d'adresses, de telle sorte que, dans les dispositifs radio, le logiciel spécifique à la forme d'onde est constitué par les ensembles de paramètres partiels lus par radio par l'intermédiaire des adresses et la partie descriptive du logiciel enregistrée dans le dispositif radio.

3. Système selon al revendication 1 ou 2, **caractérisé en ce que** la division des paramètres individuels en ensembles de paramètres partiels est choisie de telle sorte que ceux-ci puissent être utilisés pour plusieurs différents ensembles de paramètres partiels spécifiques à la forme d'onde.
